# EUROPÄISCHE PATENTSCHRIFT

(11) **EP 0 537 664 B1**
(45) Veröffentlichungstag und Bekanntmachung des Hinweises auf die Patenterteilung: **02.01.1997**
(21) Anmeldenummer: 92117423.1
(22) Anmeldetag: 12.10.1992
(51) Int. Cl.: H01J 9/00, H01J 9/50

(54) **Recycling-Verfahren für Bildschirm-Glasröhren mit der Entfernung umweltschädlicher Beschichtungen**
Method of recycling cathode ray tube screens comprising removing environmentally harmful coatings
Procédé de recyclage des écrans de tubes à rayons cathodiques en enlevant des revêtements dangereux pour l'environnement

(30) Priorität: 13.10.1991 DE 4133732
(43) Veröffentlichungstag der Anmeldung: 21.04.1993
(73) Patentinhaber: ENTSORGUNG VERWERTUNG UND ALTLASTENSANIERUNG BETEILIGIUNGS-GmbH ( EVAS), D-70174 Stuttgart (DE)
(72) Erfinder: ENTSORGUNG VERWERTUNG UND ALTLASTENSANIERUNG BETEILIGIUNGS-GmbH ( EVAS), D-70174 Stuttgart (DE)
(74) Vertreter: Beetz & Partner Patentanwälte

(56) Entgegenhaltungen:
- EP-A- 0 222 949
- US-A- 5 045 007
- DATABASE WPI Week 7741, Derwent Publications Ltd., London, GB; AN 77-73486 & JP-A-52 104 556 ( MATSUSHITA ) 2.September 1977

## Beschreibung

Die Erfindung betrifft ein Recycling-Verfahren für Bildschirm-Glasröhren, bei welchem die Beschichtung von Glas in einem Reagenzien enthaltenden wäßrigen Bad unter Einwirkung von Ultraschall abgelöst wird.

Aus der EP-A-0 222 949 ist es bereits bekannt, vorzugsweise die äußeren, teilweise beschädigten Graphitbeschichtungen vom Glaskörper einer Bildschirmröhre abzulösen, um diesen gereinigten Glaskörper einem erneuten Beschichtungsvorgang zuführen zu können. Zum Ablösen der beschädigten Beschichtung wird der Glaskörper oder seine beiden Hauptteile in einem alkalischen wäßrigen Reinigungsbad eingetaucht der Einwirkung von Ultraschall ausgesetzt, der von im Bad in einer bestimmten Anordnung angeordneten Transducern erzeugt wird.

Aus der US-A-5 045 007 ist ein Verfahren zur Ablösung der aus Schwermetallen und alkalischen Silikaten bestehenden Beschichtung von der Oberfläche einer Bildschirm-Glasröhre bekannt, bei dem die Glasröhre in eine Reinigungslösung eingetaucht wird, die im wesentlichen Ammoniumdifluorid, ein Detergens und Wasser enthält. Durch Rühren dieser Lösung wird die Beschichtung abgelöst, woraufhin die gewaschene und getrocknete Bildschirm-Glasröhre erneut beschichtet wird.

Aufgabe der Erfindung ist es, ein Verfahren aufzuzeigen, das eine vollständige Ablösung der Metallbeschichtungen von den Glasröhren in einem so hohen Maß ermöglicht, daß diese Gläser problemlos einem Wiederverwertungsprozeß zugeführt werden können.

Diese Aufgabe wird erfindungsgemäß dadurch gelöst, daß die Bildschirm-Glasröhren zerkleinert werden, das so erhaltene Bruchglas-Gemisch in dem schwachsauren Reinigungsbad kontinuierlich in Bewegung gehalten und gleichzeitig der Beschallung durch Ultraschall ausgesetzt wird, die wäßrige Suspension aus den schwachsauren Reagenzien und den abgelösten Beschichtungsmaterialien nach einer Filterung teilweise im Kreislauf geführt und teilweise aufbereitet wird und der von den Beschichtungsmaterialien befreite Glasbruch gewaschen und einer Weiterverwendung zugeführt wird.

Der Verfahrensablauf ist im beiliegenden Verfahrensschema dargestellt. Die Bildröhren werden mittels eines Transportbands 1 in eine Zerkleinerungseinheit 2 gefahren. Dort werden die Glasröhren zerkleinert und gelangen als Glasbruch auf ein Transportband 3 zum Weitertransport. In der Zerkleinerungsanlage sind Sprühdüsen zur Befeuchtung der Bildröhren eingebaut. Das zur Spühung verwendete Wasser wird am Boden der Zerkleinerungsanlage gesammelt, über eine Filtereinheit 4 gereinigt und mittels einer Pumpe 5 wieder im Kreislauf in die Zerkleinerungseinheit zurückgepumpt.

Über das Transportband 3 gelangen die zerkleinerten Röhren als Bruchglas-Gemisch in ein Reinigungsbad 6, wo sie über einen längeren Zeitpunkt einem leicht sauren, wäßrigen Bad ausgesetzt und darin kontinuierlich in Bewegung gehalten werden. Das wäßrige Bad ist gleichzeitig einer Beschallung mittels Ultraschall ausgesetzt. Hierbei werden die an den Gläsern anhaftenden Beschichtungen durch die Einwirkung der mittels Ultraschall an den Grenzschichten aufgebrachten Energie mechanisch abgelöst und gehen als gelöste oder aufschwimmende Bestandteile in das wäßrig-saure Bad über (Suspension), während das solchermaßen gereinigte Bildschirm-Glas als unlöslicher, fester Bestandteil zurückbleibt. Zusätzlich wird durch die Beschallung der Übergang der mechanisch bereits vom Glas getrennten Bestandteile in Lösung (chemische Auflösung) verstärkt.

Die mit Metallen und sonstigen löslichen und unlöslichen Stoffen befrachtete Suspension wird kontinuierlich über eine Filtereinheit 7 gereinigt und mittels einer Pumpe 9 wieder im Kreislauf in das Reinigungsbad zurückgeführt. Ein Teilstrom wird kontinuierlich ausgeschleust, über eine Wasseraufbereitungsanlage 8 von gelösten Stoffen befreit und in das Reinigungsbad wieder zurückgeführt. Die Wasseraufbereitung erfolgt mittels aus der Abwassertechnik bekannter Aufbereitungsanlagen.

Die gereinigten Glasscherben verlassen das Reinigungsbad über eine Transporteinheit 14 und werden in einem weiteren Bad 10 mit Wasser nachgespült. Das dabei verwendete Spülwasser wird kontinuierlich über eine Filtereinheit 11 gereinigt und mittels einer Pumpe 12 wieder im Kreislauf in das Reinigungsbad zurückgeführt. Ein Teilstrom wird kontinuierlich ausgeschleust, über eine Wasseraufbereitungsanlage 12 von gelösten Stoffen befreit und dem Kreislaufspülwasser wieder zugesetzt. Die Wasseraufbereitung erfolgt mittels aus der Abwassertechnik bekannter Aufbereitungsanlagen

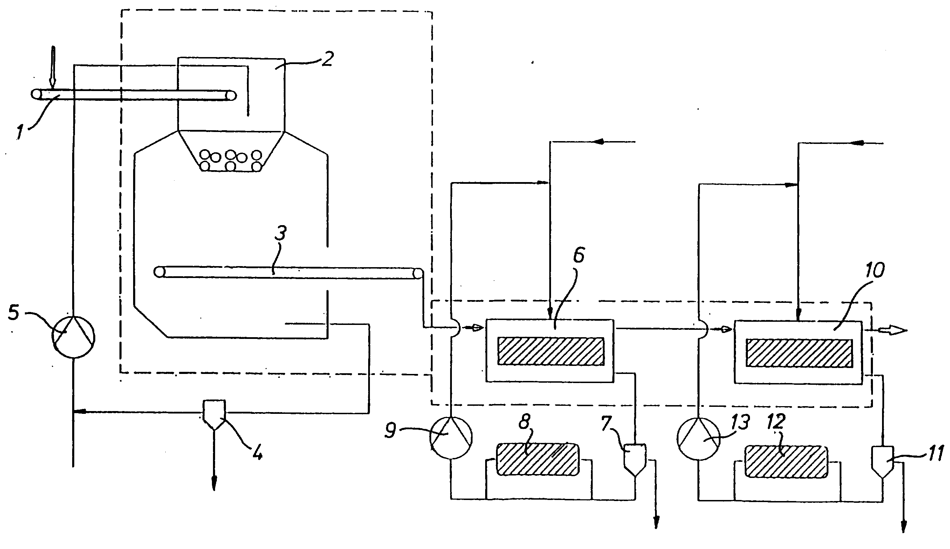

## Patentansprüche

1. Recycling-Verfahren für Bildschirm-Glasröhren, bei welchem die am Glas anhaftende Beschichtung in einem leicht sauren wäßrigen Bad unter Einwirkung von Ultraschall abgelöst wird,
gekennzeichnet durch die folgenden Schritte:
die Bildschirm-Röhren werden zerkleinert,
das dabei erhaltene Bruchglas-Gemisch wird in dem leicht sauren Bad kontinuierlich in Bewegung gehalten und gleichzeitig der Beschallung durch Ultraschall ausgesetzt,
die wäßrige Suspension aus dem leicht sauren Bad und den abgelösten Beschichtungsmaterialien wird nach einer Filterung teilweise im Kreislauf rückgeführt und teilweise aufbereitet und
der von den Beschichtungsmaterialien befreite Glasbruch wird gewaschen und einer Weiterverwendung zugeführt.

## Claims

1. A method of recycling display-screen glass tubes, wherein the coating adhering to the glass is dissolved in a slightly acid aqueous bath by action of ultrasound, characterised by the following steps:
the display-screen tubes are crushed,
the resulting broken-glass mixture is kept in continuous motion in the slightly acid bath and simultaneously irradiated with ultrasound,
the aqueous suspension from the slightly acid bath and the dissolved coating materials are filtered and then partly recycled and partly processed, and
the broken glass freed from the coating materials is washed and supplied for further use.

## Revendications

1. Procédé de recyclage de tubes cathodiques, selon lequel le revêtement qui adhère au verre est séparé par action d'un bain aqueux légèrement acide conjuguée à l'influence d'ultra-sons, caractérisé en ce qu'il comporte les étapes suivantes :
les tubes cathodiques sont broyés,
le mélange de verre brisé ainsi obtenu est maintenu dans un bain légèrement acide en mouvement continuel et, simultanément, le revêtement est exposé aux ultra-sons,
la suspension aqueuse qui résulte du bain légèrement acide et de la dissolution des matériaux de revêtement est ensuite, après une filtration, en partie recyclée et en partie traitée, et
les brisures de verre, libérées des matériaux de revêtement sont lavées et présentées pour un emploi ultérieur.
